# EUROPÄISCHE PATENTSCHRIFT

(11) **EP 2 466 274 B1**
(45) Veröffentlichungstag und Bekanntmachung des Hinweises auf die Patenterteilung: **24.10.2018**
(21) Anmeldenummer: 11190371.2
(22) Anmeldetag: 23.11.2011
(51) Int. Cl.: G01F 1/66, B06B 1/06, G10K 11/02

(54) **Ultraschallwandler für ein Ultraschall-Durchflussmessgerät, Ultraschall-Durchflussmessgerät, und Verwendung des Ultraschallwandlers**
Acoustic transducer for an ultrasonic flowmeter, ultrasonic flowmeter, and use of the acoustic transducer
Transducteur acoustique pour un capteur de débit ultrasonore, capteur de débit ultrasonore, et utilisation du transducteur acoustique

(30) Priorität: 20.12.2010 DE 102010063538
(43) Veröffentlichungstag der Anmeldung: 20.06.2012
(73) Patentinhaber: Endress + Hauser Flowtec AG, 4153 Reinach (CH)
(72) Erfinder: Ueberschlag, Pierre, 68300 Saint-Louis (FR); Bezdek, Michal, 4147 Aesch (CH); Berger, Andreas, 79686 Hasel-Glashütten (DE)
(74) Vertreter: Andres, Angelika Maria

(56) Entgegenhaltungen:
- DE-A1-102005 044 880
- DE-B4- 10 084 627
- DE-C1- 4 230 773
- DE-T2- 3 687 271
- DE-U1- 29 509 574
- US-A- 3 890 423

## Beschreibung

Die vorliegende Erfindung betrifft ein Ultraschall-Durchflussmessgerät, mit einem Ultraschallwandler, weicher ein Ultraschallfenster aufweist.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen. Die bekannten Ultraschall-Durchflussmessgeräte arbeiten häufig nach dem Doppler- oder nach dem Laufzeitdifferenz-Prinzip.

Beim Laufzeitdifferenz-Prinzip werden die unterschiedlichen Laufzeiten von Ultraschallimpulsen relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Die Laufzeit wird in der US-A 50 52 230 mittels kurzen Ultraschallimpulsen ermittelt.

Die Ultraschallwandler bestehen normalerweise aus einem elektromechanischen Wandlerelement, z.B. ein piezoelektrisches Element, und einer Membran. Ultraschallwellen werden im elektromechanischen Wandlerelement erzeugt und bei Clamp-On-Systemen über die Membran, oder auch Koppelschicht, zur Rohrwandung geführt und von dort in die Flüssigkeit geleitet. Bei Inline-Systemen werden die Ultraschallwellen über die Membran in das Messmedium eingekoppelt. Dann wird die Membran auch Ultraschallfenster genannt.

Zwischen dem piezoelektrischen Element und Koppelschicht oder Ultraschallfenster kann eine weitere Schicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

Als Anpassungsschicht wird ein isotropes Material, üblicherweise ein Harz oder ein Kleber verwendet, um zusätzlich zur Transmission das elektromechanische Wandlerelement am Ultraschallfenster fest anzubringen, wie in DE 10 2008 055 123 B3 offenbart. Die WO 2009/024403 A1 lehrt darüber hinaus noch eine Technik, die Dicke der Anpassungsschicht vorgegeben werden kann.

Die DE10084627B4 lehrt einen Messwertaufnehmer für akustische Messungen eines Gasstroms, wobei zwischen einem akustisch aktiven Element und einer Metallmembran eine akustische Anpassungsschicht aus Teflon angeordnet ist.

Die DE 10 2007 042 663 A1 offenbart nun, dass auch eine Anpassungsschicht aus Öl bekannt ist. Die DE 295 09 574 U1 nennt als weitere, für eine Anpassungschicht bzw. Koppelschicht verwendbare Materialien Kleber, Fett oder Gel. Jedoch bringen sowohl die Anpassungsschicht aus Kleber, als auch die Anpassungsschicht aus Öl eindeutige Nachteile mit sich. Durch unterschiedliche Wärmeausdehnungen von Ultraschallfenster, Kleber und elektromechanischem Wandlerelement kommt es häufiger zu mechanischen Spannungen in den genannten Bauteilen, die zur Funktionsuntüchtigkeit des Ultraschallwandlers führen können. Öl neigt beispielsweise dazu, bei höheren Temperaturen auszugasen oder es verliert seine kontaktvermittelnde Wirkung bei niedrigen Temperaturen.

Die DE 10 2005 044 880 A1 offenbart ein Ultraschalldurchflussmessgerät mit einer Anpassungsschicht und den Einsatz von Koppelfett. Die Anpassungsschicht und das Koppelfett werden durch eine Feder gegen ein Ultraschallfenster gedrückt.
Die US 3,890,423 A offenbart eine Flüssigkeit zwischen den Elektroden und dem Gehäuse eines Ultraschallwandlers. Diese Flüssigkeit ist nicht näher definiert.
Die DE 42 30 773 C1 offenbart eine feste Anpassungsschicht.
Die DE 36 87 271 T2 offenbart ein gepresstes Piezoelement, welches optional noch Koppelfett aufweisen kann.

Die Aufgabe der Erfindung besteht darin, ein Ultraschall-Durchflussmessgerät vorzuschlagen, welches eine hohe Robustheit mit niedriger Querempfindlichkeit bei gleichzeitig einfacher Fertigung aufweist.

Die Aufgabe wird gelöst durch die Gegenstände der unabhängigen Ansprüche 1, 7 und 8. Weiterbildungen und Ausgestaltungen der Erfindung finden sich in den Merkmalen der jeweils abhängigen Ansprüche wider.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.

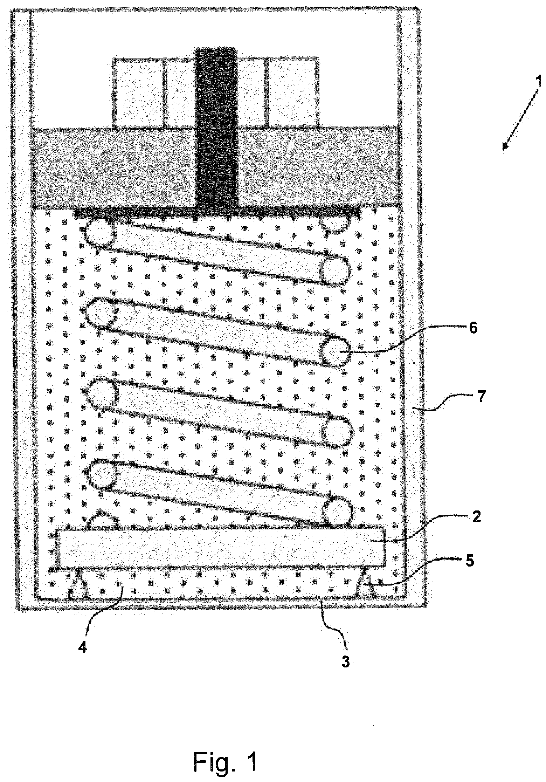

Fig. 1 zeigt einen erfindungsgemäßen Ultraschallwandler im Querschnitt.

In Fig.1 ist ein erfindungsgemäßer Ultraschallwandler 1 im Querschnitt dargestellt. Er weist ein elektromechanisches Wandlerelement 2, zur Wandlung von mechanischen Wellen, insbesondere akustischen Wellen, in elektrische Signale und umgelehrt, und ein Ultraschallfenster 3 auf, welches zur Ein- und/oder Auskopplung der akustischen Wellen in den und/oder aus dem Ultraschallwandler dient. Er ist geeignet in einem Ultraschall-Durchflussmessgerät der Prozesstechnik eingesetzt zu werden, insbesondere in einem so genannten Inline-Ultraschall-Durchflussmessgerät. Dieses weist zur Laufzeitdifferenzmessung zumindest zwei erfindungsgemäße Ultraschallwandler 1 auf, welche einander gegenüberliegend in ein Messrohr eingesetzt sind.

Verwendung findet ein erfindungsgemäßer Ultraschallwandler 1 z.B. bei Hochtemperaturanwendungen oder der Durchfluss-Messung von Gas.

Neben dem elektromechanischen Wandlerelement 2 und dem Ultraschallfenster 3, weist der Ultraschallwandler 1 weiterhin eine bei Betriebsbedingungen des Ultraschallwandlers 1 flüssige Anpassungsschicht 4 zwischen dem elektromechanischen Wandlerelement 2, insbesondere einem piezoelektrischen Ultraschallwandlerelement, und dem Ultraschallfenster 3 auf. Die genannten Bauteile sind hier von einem Gehäuse 7 des Ultraschallwandlers 1 umschlossen. Des weiteren weist der Ultraschallwandler 1 Haltemittel, in diesem Ausführungsbeispiel eine Feder 6 auf, welche eine wieder einfach zu lösende Kraft in Richtung des Ultraschallfensters 3 auf das elektromechanische Wandlerelement 2 aufbringt, um das elektromechanische Wandlerelement 2 gegenüber dem Ultraschallfenster 3 in einem Bereich einer vorgegebenen Position zu halten.

Als Federn 6 eignen sich beispielsweise Spiral- oder Tellerfedern, um die notwendige Kraft, welche zwischen 0,1 N und 100 N, beispielsweise im Bereich zwischen 5 N und 20 N, liegt, aufzubringen. Dabei ist die Kraft eine zusätzliche Kraft zu der auf das elektromechanische Wandlerelement 2 wirkenden Schwerkraft. Das elektromechanische Wandlerelement 2 und das Ultraschallfenster 3 sind nicht stoffschlüssig verbunden - es wirken keine Adhäsionskräfte, wie z.B. durch Kleber. Eine Verbindung zwischen dem elektromechanischen Wandlerelement 2 und dem Ultraschallfenster 3 ist kraftschlüssig. Falls das elektromechanische Wandlerelement 2 und/oder das Ultraschallfenster 3 etwaige kongruente Ausformungen aufweisen, welche ineinander eingreifen, um eine noch bessere Fixierung der genannten Bauteile zueinander zu erreichen, ist ein Anteil der Verbindung formschlüssig. Zur elektrischen Kontaktierung des elektromechanischen Wandlerelements 2 dient beispielsweise das Haltemittel, hier die Feder 6.

Die Betriebsbedingungen eines erfindungsgemäßen Ultraschallwandlers 1 hängen von vielen Faktoren ab. Ein wichtiger Faktor ist dabei die Temperatur. Die Flüssigkeit, welche als flüssige Anpassungsschicht 4 fungiert, ist bei Betriebsbedingungen flüssig, d.h. zwischen -100°C und 200°C, insbesondere zwischen 0°C und 100°C, insbesondere bei 20°C. Bei der Flüssigkeit der Anpassungsschicht 4 handelt es sich gemäß einer Ausführungsform der Erfindung um ein Öl, insbesondere um Mineral-, Ester- oder Silikonöl. Da in Flüssigkeiten im Regelfall eine Transmission von akustischen Transversalwellen nicht möglich ist, werden diese auch hier nicht vom elektromechanischen Wandlerelement 2 auf das Ultraschallfenster 3 und umgekehrt übertragen. Daraus ergibt sich eine verbesserte Signalform und ein verbessertes Signal zu Rauschen Verhältnis. Mechanische Belastungen oder Alterungseffekte, wie bei Klebern zu beobachten, sind nicht zu erwarten. Aber auch die akustische Anpassung ist gegeben durch die Auswahl von entsprechenden Flüssigkeiten, wie z.B. Silikonölen mit niedrigen akustischen Impedanzen.

Damit die flüssige Anpassungsschicht 4 eine vorgegebene Dicke zwischen dem elektromechanischen Wandlerelement und dem Ultraschallfenster und damit eine vorgegebene Höhe senkrecht auf das elektromechanische Wandlerelement 2 und auf das Ultraschallfenster 3 aufweist, sind Abstandhalter 5 zwischen dem elektromechanischen Wandlerelement 2 und dem Ultraschallfenster 3 angeordnet. Diese geben die Höhe zwischen dem elektromechanischen Wandlerelement 2 und dem Ultraschallfenster 3 vor. Das elektromechanische Wandlerelement 2 und das Ultraschallfenster 3 sind insbesondere planparallel zueinander angeordnet. Abstandhalter 5 bestehen dabei beispielsweise aus stoffschlüssig mit dem Ultraschallfenster verbundenen Stiften. Ultraschallfenster 3 und Abstandshalter 5 könnten jedoch auch einstückig monolithisch hergestellt sein.

Die Dicke der flüssigen Anpassungsschicht 4, und damit im weitergebildeten Fall die Höhe der Abstandshalter 5, und die Dicke des Ultraschallfensters 3 sind dabei so gewählt, dass die flüssige Anpassungsschicht 4 und das Ultraschallfenster 3 zusammen eine Wirkung einer so genannten λ/4-Schicht aufweisen. Die flüssige Anpassungsschicht 4 und das Ultraschallfenster 3 bestehen zwar aus unterschiedlichen Materialen, das Ultraschallfenster 3 besteht beispielsweise aus Edelstahl, und weisen damit unterschiedliche Schallgeschwindigkeiten und voneinander verschiedene akustische Impedanzen auf, lassen sich aber in für einen Fachmann bekannter Weise rechnerisch zusammenfassen, wobei eine Gesamtimpedanz und eine Gesamtschallgeschwindigkeit angegeben werden kann. Dies kann dadurch geschehen, da die Dicke des Ultraschallfensters 3 sehr klein ist, insbesondere weniger als 1/10 der Wellenlänge λ des vom elektromechanischen Wandlerelement 2 ausgesandten akustischen Signals im Ultraschallfenster 3 beträgt, beispielsweise 1/100 der Wellenlänge λ des akustischen Signals im Ultraschallfenster 3. Die flüssige Anpassungsschicht 4 ist dann kleiner 1/4 der Wellenlänge λ des vom elektromechanischen Wandlerelement 2 ausgesandten akustischen Signals in der Anpassungsschicht 4, beispielsweise λ/8. Dem Fachmann ist bekannt, dass die Dicke einer λ/4-Schicht ein ungeradzahliges Vielfaches von λ/4 betragen kann. Deshalb gelten für die eben genannten Werte der Dicken des Ultraschallfensters 3 und der Anpassungsschicht 4, dass diese entsprechend ebenfalls ungeradzahlige Vielfache der genannten Werte betragen können. Die so ausgestaltete λ/4-Schicht dient zur Anpassung der akustischen Impedanzen zwischen dem elektromechanischen Wandlerelement 2 und dem Messmedium. Das Messmedium weist beispielsweise eine akustische Impedanz kleiner 1 MRayl auf,das elektromechanischen Wandlerelement 2 jedoch von größer 5 oder 10 MRayl. Dann weist die λ/4-Schicht aus flüssiger Anpassungsschicht 4 und Ultraschallfenster 3 eine Impedanz auf, die zwischen diesen Werten liegt. Die flüssige Anpassungsschicht 4 selbst weist beipsielsweise eine akustische Impedanz von ca. 0,5 bis 1,5 MRayl auf.

Es besteht also ein deutlicher Unterschied zwischen einer erfindungsgemäßen flüssigen Anpassungsschicht 4 und einer Flüssigkeit als Koppelschicht, welche lediglich der besseren Vermittlung des direkten Kontakts zwischen elektromechanischem Wandlerelement und Ultraschallfenster dient, insbesondere um Unebenheiten in deren Oberflächen auszugleichen.

Zur einfacheren Fertigung und zur besseren Dämpfung füllt die Flüssigkeit der Anpassungsschicht 4 den gesamten freien Innenraum eines Gehäuses 7 des Ultraschallwandlers 1 aus. Um das Gehäuse vor Zerstörung durch eine thermische Ausdehnung der Flüssigkeit zu schützen, kann der Druck der Flüssigkeit im Gehäuse 7 durch einen beweglichen und somit druckausgleichenden Kolben 8, der das Gehäuse 7 einseitig verschließt, nach oben hin begrenzt oder gar näherungsweise konstant gehalten werden, beispielsweise auf Umgebungsdruck oder auf 1 bar, oder es sind weitere Maßnahmen zum Druckausgleich im Gehäuse vorgesehen. So könnte beispielsweise ein mit Gas gefüllter Balg oder eine geschlossenporiger Schaumstoffkörper in das Gehäuse 7 in die Flüssigkeit eingebracht werden, die sich bei steigendem Druck deformieren und den Druck entsprechend begrenzen. Da sich die akustischen Eigenschaften der Flüssigkeit der Anpassungsschicht 4 jedoch bei steigendem Druck kaum ändern, sind diese Maßnahmen mechanischer Natur.

### Bezugszeichenliste

- 1: Ultraschallwandler
- 2: Elektromechanisches Wandlerelement
- 3: Ultraschallfenster
- 4: Anpassungsschicht
- 5: Abstandshalter
- 6: Feder
- 7: Gehäuse des Ultraschallwandlers

## Patentansprüche

1. Ultraschallwandler (1) für ein Ultraschall-Durchflussmessgerät umfassend ein elektromechanisches Wandlerelement (2) und ein Ultraschallfenster (3),
wobei der Ultraschallwandler (1) Haltemittel (6) aufweist, welche eine lösbare Kraft in Richtung des Ultraschallfensters (3) auf das elektromechanische Wandlerelement (2) aufbringen, um das elektromechanische Wandlerelement (2) gegenüber dem Ultraschallfenster (3) in einer vorgegebenen Position zu halten, wobei eine Anpassungsschicht (4) zwischen dem elektromechanischen Wandlerelement (2) und dem Ultraschallfenster (3) angeordnet ist, die zur Reduktion einer durch unterschiedliche akustische Impedanzen verursachte akustische Reflektion an den Grenzschichten zwischen zwei Materialien dient,
**dadurch gekennzeichnet,**
**dass** die Anpassungsschicht (4) eine bei Betriebsbedingungen des Ultraschallwandlers (1) flüssige Anpassungsschicht (4) ist, wobei die flüssige Anpassungsschicht (4) und das Ultraschallfenster (3) zusammen eine Wirkung einer sogenannten λ/4-Schicht aufweisen, wobei die Dicke der λ/4-Schicht durch zwischen dem Wandlerelement (2) und dem Ultraschallfenster (3) angeordnete Abstandhalter (5) vorgegeben ist.

2. Ultraschallwandler (1) für ein Ultraschall-Durchflussmessgerät nach Anspruch 1,
**dadurch gekennzeichnet,**
**dass** es sich bei den Haltemitteln um eine Feder (6) handelt.

3. Ultraschallwandler (1) für ein Ultraschall-Durchflussmessgerät nach einem der Ansprüche 1 oder 2,
**dadurch gekennzeichnet,**
**dass** die Flüssigkeit der Anpassungsschicht (4) den gesamten freien Innenraum eines Gehäuses (7) des Ultraschallwandlers (1) ausfüllt.

4. Ultraschallwandler (1) für ein Ultraschall-Durchflussmessgerät nach einem der Ansprüche 1 bis 3,
**dadurch gekennzeichnet,**
**dass** es sich bei der Flüssigkeit der Anpassungsschicht (4) um ein Mineral-, Ester- oder Silikonöl handelt,

5. Ultraschallwandler (1) für ein Ultraschall-Durchflussmessgerät nach einem der Ansprüche 1 bis 4,
**dadurch gekennzeichnet,**
**dass** das Haltemittel (6) so ausgestaltet ist, dass es zu einer elektrischen Kontaktierung des elektromechanischen Wandlerelements (2) dient.

6. Ultraschallwandler (1) für ein Ultraschall-Durchflussmessgerät nach einem der Ansprüche 1 bis 5,
**dadurch gekennzeichnet,**
**dass** die flüssige Anpassungsschicht (4) und das Ultraschallfenster (3) zusammen eine akustische Impedanz aufweisen, welche geringer ist, als die akustische Impedanz des elektromechanischen Wandlerelements (2).

7. Ultraschall-Durchflussmessgerät,
**dadurch gekennzeichnet,**
**dass** es zumindest zwei Ultraschallwandler (1) nach einem der Ansprüche 1 bis 6 aufweist, welche einander gegenüberliegend in ein Messrohr eingesetzt sind.

8. Verwendung eines Ultraschallwandlers (1) nach einem der Ansprüche 1 bis 6, zur Durchfluss-Messung von gasförmigen Messmedien oder zur Messung bei hohen Temperaturen.

## Claims

1. Ultrasonic transducer (1) for an ultrasonic flowmeter comprising an electromechanical transducer element (2) and an ultrasonic window (3), wherein the ultrasonic transducer (1) has holding mechanisms (6), which apply a releasable force in the direction of the ultrasonic window (3) onto the electromechanical transducer element (2) in order to hold the electromechanical transducer element (2) in a predefined position in relation to the ultrasonic window (3), wherein an adaptation layer (4) is arranged between the electromechanical transducer element (2) and the ultrasonic window (3), said layer serving to reduce an acoustic reflection at the interfaces between two materials which is caused by different acoustic impedances,
**characterized in that**
the adaptation layer (4) is a liquid adaptation layer (4) at operating conditions of the ultrasonic transducer (1), wherein the liquid adaptation layer (4) and the ultrasonic window (3) together present an effect of a so-called λ/4 layer, wherein the thickness of the λ/4 layer is defined by spacers (5) arranged between the transducer element (2) and the ultrasonic window (3).

2. Ultrasonic transducer (1) for an ultrasonic flowmeter as claimed in Claim 1,
**characterized in that**
the holding mechanism is a spring (6).

3. Ultrasonic transducer (1) for an ultrasonic flowmeter as claimed in one of the Claims 1 or 2,
**characterized in that**
the liquid of the adaptation layer (4) fills the entire free interior space of a housing (7) of the ultrasonic transducer (1).

4. Ultrasonic transducer (1) for an ultrasonic flowmeter as claimed in one of the Claims 1 or 3,
**characterized in that**
the liquid of the adaptation layer (4) is a mineral oil, ester oil or silicone oil.

5. Ultrasonic transducer (1) for an ultrasonic flowmeter as claimed in one of the Claims 1 or 4,
**characterized in that**
the holding mechanism (6) is designed in such a way that it serves the electrical contact of the electromechanical transducer element (2).

6. Ultrasonic transducer (1) for an ultrasonic flowmeter as claimed in one of the Claims 1 or 5,
**characterized in that**
the liquid adaptation layer (4) and the ultrasonic window (3) together present an acoustic impedance that is smaller than the acoustic impedance of the electromechanical transducer element (2).

7. Ultrasonic flowmeter,
**characterized in that**
it features at least two ultrasonic transducers (1) as claimed in one of the Claims 1 to 6 which are inserted into a measuring tube in a manner in which they are opposite one another.

8. Use of an ultrasonic transducer (1) as claimed in one of the Claims 1 to 6 for the flow measurement of gaseous media or for measurement at high temperatures.

## Revendications

1. Transducteur à ultrasons (1) pour un débitmètre à ultrasons comprenant un élément transducteur électromécanique (2) et une fenêtre à ultrasons (3),
le transducteur à ultrasons (1) comportant des moyens de retenue (6), qui appliquent une force amovible en direction de la fenêtre à ultrasons (3) sur l'élément transducteur électromécanique (2), afin de maintenir l'élément transducteur électromécanique (2) dans une position prédéfinie, une couche d'adaptation (4) étant disposée entre l'élément transducteur électromécanique (2) et la fenêtre à ultrasons (3), laquelle sert à la réduction d'une réflexion acoustique occasionnée par différentes impédances acoustiques, au niveau des couches interfaciales entre deux matériaux,
**caractérisé**
**en ce que** la couche d'adaptation (4) est une couche d'adaptation liquide dans les conditions de fonctionnement du transducteur à ultrasons, la couche d'adaptation (4) liquide et la fenêtre à ultrasons présentant conjointement un effet d'une dite couche λ/4, l'épaisseur de la couche λ/4 étant prédéfinie par l'entretoise (5) disposée entre l'élément transducteur (2) et la fenêtre à ultrasons (3).

2. Transducteur à ultrasons (1) pour un débitmètre à ultrasons selon la revendication 1,
**caractérisé**
**en ce que**, concernant les moyens de retenue, il s'agit d'un ressort (6).

3. Transducteur à ultrasons (1) pour un débitmètre à ultrasons selon l'une des revendications 1 ou 2,
**caractérisé**
**en ce que** le liquide de la couche d'adaptation (4) remplit l'espace intérieur complet d'un boîtier (7) du transducteur à ultrasons (1).

4. Transducteur à ultrasons (1) pour un débitmètre à ultrasons selon l'une des revendications 1 à 3,
**caractérisé**
**en ce que**, concernant le liquide de la couche d'adaptation (4), il s'agit d'une huile minérale, d'une huile-ester ou d'une huile de silicone.

5. Transducteur à ultrasons (1) pour un débitmètre à ultrasons selon l'une des revendications 1 à 4,
**caractérisé**
**en ce que** le moyen de retenue (6) est conçu de telle sorte à servir de contact électrique de l'élément transducteur électromécanique (2).

6. Transducteur à ultrasons (1) pour un débitmètre à ultrasons selon l'une des revendications 1 à 5,
**caractérisé**
**en ce que** la couche d'adaptation liquide (4) et la fenêtre à ultrasons (3) présentent ensemble une impédance acoustique, laquelle est inférieure à l'impédance acoustique de l'élément transducteur électromécanique (2).

7. Débitmètre à ultrasons,
**caractérisé**
**en ce qu'**au moins deux transducteurs à ultrasons (1) selon l'une des revendications 1 à 6 sont insérés, disposés à l'opposé l'un de l'autre, dans un tube de mesure.

8. Utilisation d'un transducteur à ultrasons (1) selon l'une des revendications 1 à 6 pour la mesure de débit de produits gazeux ou pour la mesure en présence de températures élevées.
